# EUROPEAN PATENT SPECIFICATION

(11) **EP 2 910 831 B1**
(45) Date of publication and mention of the grant of the patent: **29.11.2017**
(21) Application number: 15382068.3
(22) Date of filing: 19.02.2015
(51) Int. Cl.: F16L 41/08, A62C 35/68

(54) **Branched tube and method for forming a branch in a tubular body**
Abzweigrohr und Verfahren zur Herstellung eines Abzweigs in einem rohrförmigen Körper
Tube de dérivation et procédé de formation d'une dérivation dans un corps tubulaire

(30) Priority: 21.02.2014 ES 201430240 U
(43) Date of publication of application: 26.08.2015
(73) Proprietor: Filinox, S.A., 08030 Barcelona (ES)
(72) Inventor: Suris Jorda, Luis Mª, 08030 Barcelona (ES)
(74) Representative: Sugrañes Patentes y Marcas

(56) References cited:
- US-A- 5 088 194
- US-A1- 2004 080 157
- US-B1- 6 499 769

## Description

### Technical field of the invention

The invention relates to a branched tube that enables the incorporation of additional devices into a conduit, such as sprinklers in a fire protection installation, and a method for forming a branch in a tubular body.

### Background of the invention

Devices that enable forming branches in tubes so as to enable the incorporation of an additional length of a tube or an additional device fitted into said tube, such as sprinkler, are known. For instance, there are known T-shaped lengths intended to be interposed between two tube lengths, nevertheless said devices require cutting completely a tube into two portions to interpose said T-shaped length. This process is complicated since it requires cutting completely the tube and the incorporation of branches into tubes that are previously fixed in a wall becomes very difficult.

To solve this disadvantage there are known devices provided with a clamp that enables, after drilling a hole in a tube, fastening a branch connected in a leak-tight manner around the hole, encircling said tube. Although these devices enable the incorporation of branches into pre-installed tubes, they are cumbersome and require having access to the entire outer face of the tube, so that if the tube is located in an area that is difficult to access, such as a corner or against a wall, it makes it difficult or even hinders the incorporation of branches.

Document US6499769 discloses a branched tube in which the branch has segments at its end to be bended or flanged to secure the branch to a tube by successively bending over or flanging the segments with a tool.

Document US5088194 discloses a branched tube in which the branch is constituted of a deformable metal and provided with a bead at its end to be simultaneously deformed for securing the branch to a main tube.

Therefore, an aim of the present invention is to disclose a branched tube that may be formed in pre-installed tubes or even in areas that are difficult to access, enabling the easy incorporation of new branches.

Another aim is to disclose an alternative to the known branched tubes.

### Description of the invention

The branched tube of the present invention according to claim 1 is of the variety that comprises a main tubular body and at least one additional tubular body fitted in a leak-tight manner into a hole drilled in the wall of said main tubular body.

In essence, the branched tube is characterised in that the additional tubular body comprises a support surface applied, at least partly, onto the outer face of the main tubular body wall; and a mouth, also tubular, which passes through the hole and is flared, for example said mouth being cold-expanded after the insertion thereof into the main tubular body, fastening said flared mouth by the compression the additional tubular body exerts on the main tubular body. In this way a leak tight joint is achieved, for example by means of an O-ring, between the main tubular body and one or more additional tubular bodies, enabling in addition the easy insertion of other additional tubular bodies. By means of the branched tube of the present invention it is also possible to turn a pre-installed tube into a tube with one or more branches without having to cut completely said tube.

In an alternative embodiment, the entire perimeter of the flared mouth end of the additional tubular body that passes through the hole is expanded, thus determining a crown that may be partly applied onto the inner face of the main tube wall around the hole, fastening tightly the additional tubular body to the main tubular body. Naturally, this expansion could also be carried out only in part of the perimeter, provided that it enables to fasten in a leak-tight manner the additional tubular body to the main tubular body.

In another variant of interest, the entire perimeter of the mouth is expanded by plastic deformation of said mouth, which is continuous, i.e., without causing cracks or cuts in the formed crown, while guaranteeing the fastening of the additional tubular body to the main tubular body. Naturally, if the deformation exceeds certain threshold, it has also been envisaged that should the mouth be shorn or torn open at certain points, in that case the leak tightness of the installation shall be verified.

In an alternative embodiment, the outer support surface substantially retraces the shape of the outer face of the main tube wall around the hole, thus enabling the additional tubular body to be correctly supported on the outer wall of the tubular body, and preventing it from rotating.

In a variant of interest, the support surface comprises two diametrically-opposed concave lengths that are adapted to the curvature of the cross-section of the main tubular body. Naturally, said concave lengths will coincide thus determining two edges on the support surface, so to smooth said edges they are preferably bevelled, for example by means of two diametrically-opposing flat lengths in the support surface.

In an alternative embodiment, it is further disclosed that the additional tubular body comprises a sealing gasket applied against the outer face of the main tubular body wall, generating a leak-tight joint between the main tubular body and the additional tubular body. Said sealing gasket is preferably an O-ring, thus enabling an enhanced leak-tight joint since the forces are better distributed.

In another alternative embodiment, the sealing gasket is housed in an annular groove arranged between the support surface and the mouth of the additional tubular body, thus enabling the gasket to protrude as much as necessary from the additional tubular body without being an obstacle, since it is deformed by the pressure exerted, for the correct application of the support surface onto the outer face of the main tubular body.

In a variant of interest, the additional tubular body is provided with end joining means, which enable coupling other devices, such as threaded devices, and even other tube lengths to the branched tube, for example by means of a cold-pressed joint using the system known as *press-fitting.*

In another alternative embodiment, the end joining means comprise an inner threading at the end of the additional tubular body, which enables coupling devices or other tube lengths the end of which has a male threaded shape complementary to the threading. This threading can have a diameter of half an inch, three fourths of an inch or an inch, so other devices or tube lengths whose male threaded end has these standard dimensions, may be fitted.

A protection fire installation is also disclosed, which comprises at least a branched tube provided with one or more additional tubular bodies, wherein at least one of the additional tubular bodies is joined to a sprinkler, i.e., the joining means of the additional tubular body are joined to a sprinkler, preferably screwed.

In a variant of interest, the end joining means comprise an inner channel that houses an inner gasket, preferably an O-ring, which enables to guarantee both the screwing of other devices and the application of technologies for cold-pressing the joint when the end joining means are not threaded, such as a joint by means of the *press-fitting* system. The leak-tightness at the joint by cold-pressing the joint, i.e., *press-fitting* system, it is achieved thanks to the deformation of the aforementioned gasket, which is housed in an inner channel also known as a bead, after fitting a tube inserted inside the free end of the additional tubular body and carrying out the pressing with a suitable tool machine, in a known manner.

This way, the end joining means of the additional tubular body may enable coupling a tube, which in turn, could be the end of another main tubular body of another branched tube, thus enabling the creation of complex tubing circuits.

In another variant, the ends of the main tubular body are provided with means for interconnecting other tube lengths, for example, interconnection means using the *press-fitting* system, one of the ends of the main tubular body being preferably male interconnection means and those of the other end, female interconnection means.

According to the invention, the additional tubular body is made of carbon steel, enabling the manufacture by microfusion and the ulterior machining of the end joining means, like for example an inner thread or grooved ends, for their joining by the *press-fitting* system. The possibility of making the additional tubular body of other materials, like for example stainless steel, which enables having a mouth capable of being cold-flared after being inserted into the main tubular body, has also been envisaged.

A method for forming a branch in a main tubular body is also disclosed, which is provided, for this purpose, with a hole in the wall thereof. According to the invention as defined by claim 14, the method comprises the stage of providing an additional tubular body, the end of which finishes in a support surface from where a pipe stretches out determining a mouth of the aforementioned tubular body; plugging the pipe into the hole of the main tubular body until abutting against the support surface, while simultaneously cold-flaring the pipe mouth, by expanding it inside the main tubular body so it is fastened inside by the pressure exerted against the walls of the hole, trying to exert during this action a pull from the inside of the main tubular body of the additional tubular body to force the support surface thereof to remain applied against the outer portion, i.e. face, of the wall.

In an alternative embodiment of the method, the pipe is made of a malleable material, and the thickness thereof is selected so it can be shaped without breaking during the cold-flaring of said mouth inside the main tubular body.

### Brief description of the drawings

To complete the present description and with the aim of facilitating a better understanding of the features of the invention, below as an integral part of the present specification, is a set of figures in which, by way of non-limiting examples, the following has been represented:
Figs. 1 and 2 represent an additional tubular body;
Fig. 3a represents a section of the additional tubular body;
Figs. 3b to 3e represent the insertion of the additional tubular body of Fig. 3a in a main tubular body to mount the branched tube of the present invention; and
Fig. 4 represents the branched tube of the present invention provided with sprinklers in a fire protection installation.

### Detailed description of the drawings

The branched tube 1 of the present invention is formed from a main tubular body 2, such as a tube or tube length that may have been previously fixed in an installation or at least in an additional tubular body 3. When the branched tube 1 is formed as a tube previously fixed it will be necessary to provide an operator with additional tubular bodies 3 by way of kit that may be incorporated into said tube. It has been further envisaged that in order to simplify the operation of incorporating additional tubular bodies 3 into the main tubular body 2 for the operator, the branched tube 1 may be marketed with the branches already pre-set from factory, enabling the operator to simply incorporate the branched tube 1 already pre-set into the installation.

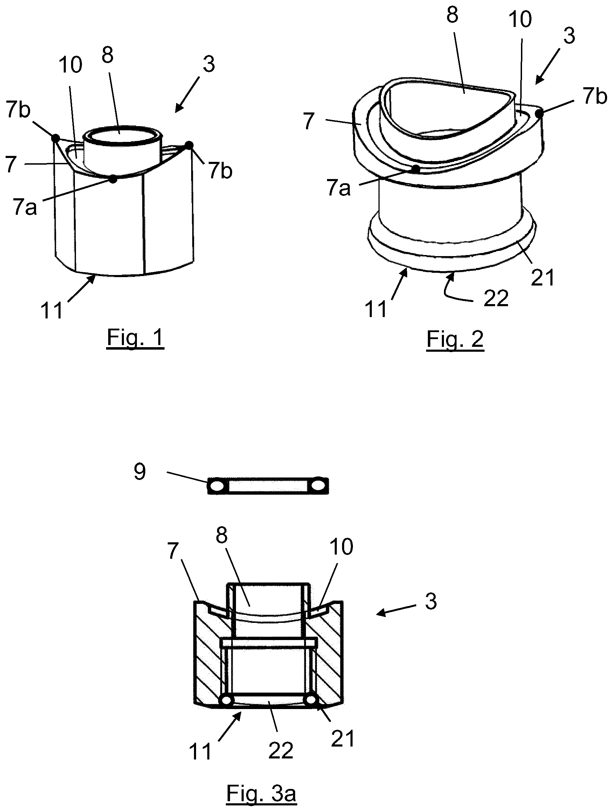

As observed in Fig. 1, the additional tubular body 3, which will be used to add a branch in a main tubular 2, as it will be detailed below, comprises a support surface 7 designed to remain applied onto the outer face 6a of the wall 6 of the main tubular body 2 and a mouth 8 suitable for passing through a hole 5 that will be drilled in the wall 6 of said main tubular body 2 in order to incorporate the branch.

This mouth 8 is conveniently prepared and sized so after its insertion into the hole 5 of the main tubular body 2 it can be flared, i.e., expanded, by means of machine tools provided with suitable expanding heads, the additional tubular body 3 being fastened by compression onto the main tubular body 2 and guaranteeing that the additional tubular body 3 remains fitted in a leak-tight manner into the hole 5 drilled in the wall 6 of the main tubular body 2, and preventing it from rotating.

The additional tubular body 3 shown in Figs. 1 and 2 comprises a support surface 7 further adapted to retrace substantially the shape of the outer face 6a of the main tube 2 wall 6 after the mouth 8 has been inserted and flared, around the hole 5 bored in said main tube 2. As observed, said support surface 7 comprises two diametrically-opposed concave lengths 7a, which will enable retracing the curvature of the main tube 2 around the hole 5. Naturally, if the main tube 2 had another section, for example square or rectangular, said support surface 7 will have to be adapted to this section, being flat for instance.

It can further be observed that the additional tubular bodies 3 shown in Fig. 1 and 2 are provided with end joining means 11 to join them to other elements of the installation or even to other tube lengths similar to the main tubular body 2 by means of *press-fitting* joints to carry out a mesh tubing interconnection.

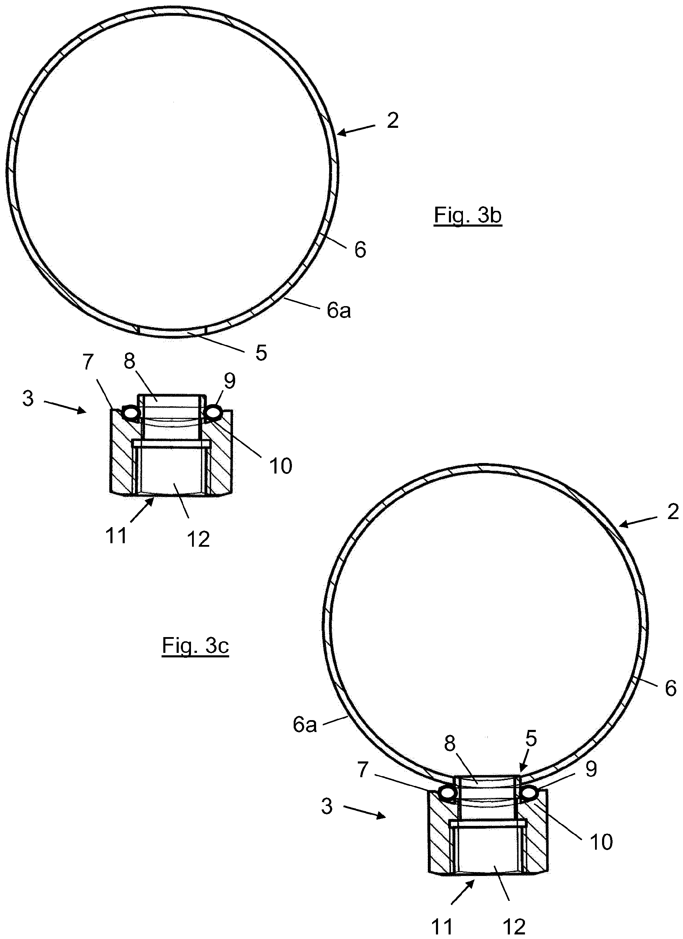

Fig. 3b shows an additional tubular body 3 in which the end joining means 11 are an inner threading 12, of half an inch, three fourths of an inch or an inch, at the end of the additional tubular body 3, which enable screwing elements such as a sprinkler. The additional tubular body 3 shown in Fig. 2 is provided with end joining means 11 to enable fitting by exerting pressure, a tube similar to the main tubular body 2, suitable to be used in joints of the *press-fitting* system. The end joining means 11 of this additional tubular body 3 comprise an inner channel 21 that houses an inner O-ring gasket 22. These joining means 11 are prepared to receive another tube to be adjusted, that may be cold-joined by means of the *press-fitting* system. It should be highlighted that when the joining means 11 are compatible with the *press-fitting* system for tubes having a diameter equal to that of the main tubular body 2, it is possible to form a complex grid of tubes by coupling tube lengths with different branched tubes 1. Naturally, it has been envisaged that the ends of the main tubular body 2 are provided with the joining elements of the *press-fitting* system, one of them being preferably a male joining element, which will just be an end of the main tubular body, and the other one a female joining element, which will incorporate a flange that will determine an inner channel where an inner O-ring will be housed, similar to the joining means 11 of the additional tubular body 3 of Fig. 2. Given that the additional tubular bodies 3 shown in Figs. 1 and 2 have diametrically-opposed concave lengths 7a, when said concave lengths 7a are joined they will determine a sharp edge or end that could be dangerous, so the support surface 7 comprises two diametrically opposed flat lengths 7b as a consequence of the bevelling of said sharp edge or end.

The additional tubular bodies 3 are made of a resistant, malleable material, which is easy to work with and whose mouth may be cold-flared, such as carbon steel, according to the invention. To facilitate its cold-flaring, when according to the invention the mouth is made of carbon steel, the thickness of the mouth ranges between 1 and 2 millimetres, preferably 1.5 millimetres, which facilitates its ability to be shaped without breaking during the mouth 8 flaring inside the main body 2. In this case, it is also advisable that the entire perimeter of the mouth 8 remains inserted at least 3 millimetres inside the main body 2, preferably 5 millimetres, to achieve a good fastening after the cold-flaring. It also has been envisaged the possibility of making the additional tubular body 3 of other materials, like for example, stainless steel. Naturally the thickness thereof shall be selected as a function of the resistance of each material.

To guarantee the leak-tightness of the joint between the main tubular body 2 and the additional tubular body 3, a sealing gasket 9 may be used, preferably an O-ring, which will remain applied against the outer wall 6a of the main tubular body 2, said gasket 9 remaining housed in an annular groove 10 arranged between the support surface 7 and the mouth 8 of the additional tubular body 3, as it will be seen below.

Figs. 3a to 3e depict the sequence for forming the branched tube 1 of the present invention, from a main tubular body 2 and an additional tubular body 3. This sequence may be carried out at the factory, to market a pre-formed branched tube 1 or it may be marketed as a kit with one or more additional tubular bodies 3 so an operator may form the branched tube 1 in an installation. To flare the mouth 8 of the additional tubular body 3 so it is fastened by compression to the main tubular body 2, it should be taken into account that a mandrel or a machine tool provided with suitable expanding heads should be used, enabling it, after the cold-insertion thereof through the mouth 8 of the additional tubular body 3 to expand with sufficient force to deform the end of the mouth 8 so as to flare it. Although the sequence is described for an additional tubular body 3, like the one in Fig. 1, the sequence would be analogous for other additional tubular bodies, for example, provided with other end joining means 11.

Fig. 3a shows a section of the additional tubular body 3, which was previously shown in Fig. 1 before its incorporation into a main tubular body 2 to form the branched tube 1. In Fig. 3a the O-ring sealing gasket 9 is shown in a correlative fitting position, so as to remain housed in the annular groove 10 arranged between the support surface 7 and the mouth 8 of the additional tubular body 3. The annular groove 10 may also have a semi-circular section to improve the housing of the gasket 9 when the latter is an O-ring. It is further observed that the joining means 11 of the body of the additional tubular body 3 comprise an inner channel 21, which houses an inner gasket 22. Although this inner gasket 22 may be useful to guarantee the leak-tight connection of other devices, that may be connected by screwing, the additional tubular body 3 may not be provided with said inner channel 21 and inner gasket 22.

Likewise, the joining means 11 could be solely formed by said inner channel 21 with its respective inner gasket 22 housed therein, for example when the joining means 11 are not threaded and are particularly adapted for their cold joining to another tube by means of a *press-fitting* system, for example in the additional tubular body 3 shown in Fig. 2.

Fig. 3b shows the section of the additional tubular body 3 and the section of a main tubular body 2 in which a hole 5 has been bored, through which the mouth 8 of the additional tubular body 3 will be inserted so as to form the branched tube 1, of the embodiment illustrated in Fig. 3c. It is advisable that the diameter of the hole 5 is equal or slightly larger than the diameter of the mouth 8 so the latter fits tightly into the hole 5, nevertheless, if the hole 5 is too large, special attention should be paid to the gasket 9 providing enough leak-tightness to the joint.

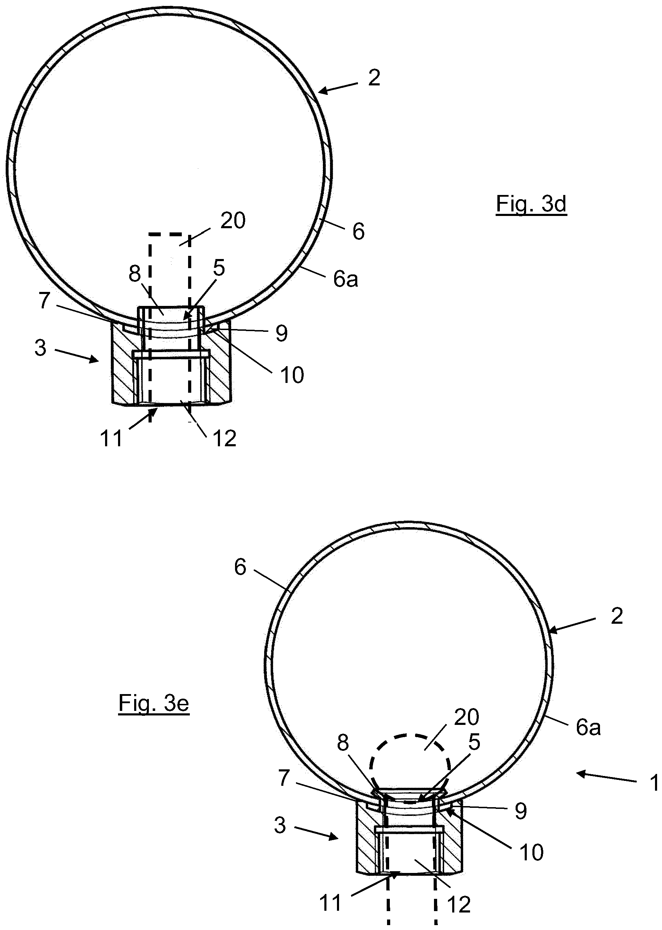

In said Fig. 3c, the additional tubular body 3 may be observed when the mouth 8 starts to be inserted inside the main tubular body 2, upon continuing with the insertion, the support surface 7 of the additional tubular body 3 is applied onto the outer face 6a of the main tubular body 2 wall 6 and the O-ring gasket 9 housed in the groove 10 and arranged around the hole 5, as shown in Fig. 3d.

In this point, shown in Fig. 3d, when the additional tubular body 3 is applied onto the main tubular body 2, which should remain tightly fastened, the cold-flaring of the end of the mouth 8 is carried out, according to the invention, by inserting an expanding tool head 20 directed by a suitable machine through the mouth 8 so as to cause a broadening thereof. It has also been envisaged that the broadening is located in other points of the mouth, instead of the end thereof, provided that it enables holding tightly the additional tubular body 3.

After the expansion of this head 20, the end of the mouth 8 will end up as shown in Fig. 3e, the mouth 8 being flared in such a way that the additional tubular body 3 is flitted in a leak-tight manner and fastened by compression into the hole 6 of the main tubular body 2 wall 6, forming the branched tube 1, shown in Fig. 3e.

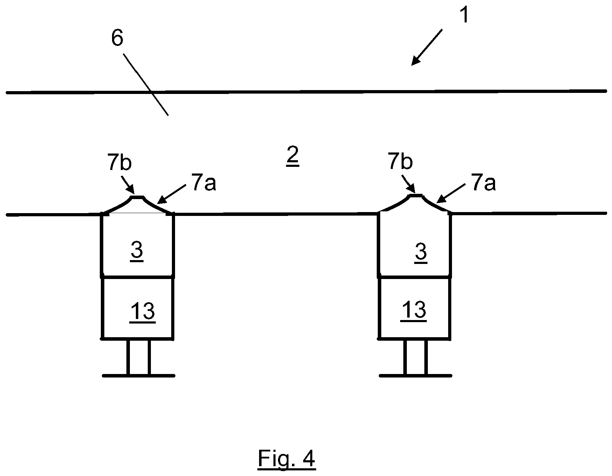

The branched tube 1 may be used to form a fire protection installation, like the one shown, partly, in Fig. 4 in which, the pressurized water stored in the circuit that forms the branched tube 1, the additional tubular bodies 3 joined in a leak-tight manner to the main tubular body 2 and forming the branches are connected to sprinklers 13, thus enabling the incorporation of sprinklers 13 at certain points of the main tubular body 2.

## Claims

1. A branched tube (1) that comprises a main tubular body (2) and at least one additional tubular body (3) fitted in an airtight manner into a hole (5) formed in the wall (6) of said main tubular body (2), wherein the additional tubular body (3) comprises a support surface (7) applied onto the outer face (6a) of the main tubular body wall (6) and a mouth (8), which passes through the hole (5) and is cold-flared, the additional tubular body (3) fastening the main tubular body (2) by compression, **characterised in that** the additional tubular body (3) is made of carbon steel and the mouth (8) has a thickness between 1 and 2 millimeters.

2. The branched tube (1) according to the preceding claim, **characterised in that** the mouth (8) has a thickness of 1.5 millimeters.

3. The branched tube (1) according to any one of the preceding claims, **characterised in that** at least part of the perimeter of the cold-flared mouth (8) end of the additional tubular body (3) is expanded.

4. The branched tube (1) according to the preceding claim, **characterised in that** the entire perimeter of the cold-flared mouth (8) end of the additional tubular body (3) is expanded.

5. The branched tube (1) according to claims 3 or 4, **characterised in that** at least part of the perimeter of the cold-flared mouth (8) end of the additional tubular body (3) is continuous.

6. The branched tube (1) according to the preceding claim, **characterised in that** the entire perimeter of the cold-flared mouth (8) end of the additional tubular body (3) is continuous.

7. The branched tube (1) according to any one of the preceding claims, **characterised in that** the support surface (7) substantially retraces the shape of the outer face (6a) of the main tube (2) wall (6) around the hole (5).

8. The branched tube (1) according to any one of the preceding claims, **characterised in that** the support surface (7) comprises two diametrically-opposed concave lengths (7a).

9. The branched tube (1) according to the preceding claim, **characterised in that** the support surface (7) comprises two diametrically-opposed flat lengths (7b).

10. The branched tube (1) according to any one of the preceding claims, **characterised in that** the additional tubular body (3) comprises a sealing gasket (9) applied against the wall (6) of the main tubular body (2), said gasket (9) being housed into an annular groove (10) arranged between the support surface (7) and the mouth (8) of the additional tubular body (3).

11. The branched tube (1) according to any one of the preceding claims, **characterised in that** the additional tubular body (3) is provided with end joining means (11).

12. The branched tube (1) according to the preceding claim, **characterised in that** the end joining means (11) comprise an inner threading (12) at the end of the additional tubular body (3).

13. A fire protection installation that comprises at least one branched tube (1) according to any one of the preceding claims provided with one or more additional tubular bodies (3), wherein at least one of the additional tubular bodies (3) is joined to a sprinkler (13).

14. A method for forming a branched tube (1) according to any one of claims 1-12, wherein the main tubular body (2), is provided, for this purpose, with the hole (5) in the wall (6) thereof, the method comprising the stages of
- providing the additional tubular body (3), wherein one of its ends finishes in the support surface (7) from where a pipe stretches out determining the mouth (8) of the aforementioned additional tubular body (3) made of carbon steel, said mouth (8) having a thickness between 1 and 2 millimeters;
- plugging the pipe into the hole (5) of the main tubular body (2) until abutting against the support surface (7);
- inserting an expanding tool head (20) through the mouth (8); and
- simultaneously cold flaring the pipe mouth (8), by expanding it by the expansion of the head inside the main tubular body (2) so it is fastened inside by compression against the walls of the hole (5), trying to exert during this action a pull from the inside of the main tubular body (2) of the additional tubular body (3) to force the support surface (7) thereof to remain applied against the outer face (6a) of the wall (6).

15. The method for forming a branched tube (1) according to the preceding claim, **characterized in that** the mouth (8) of the tubular body (3) has a thickness of 1.5 millimeters.

## Patentansprüche

1. Abzweigrohr (1) umfassend einen rohrförmigen Hauptkörper (2) und mindestens einen zusätzlichen rohrförmigen Körper (3), welcher in einer luftdichten Weise in ein in der Wand (6) des genannten rohrförmigen Hauptkörpers (2) gebildetes Loch (5) eingepasst ist, wobei der zusätzliche rohrförmige Körper (3) eine Stützfläche (7), welche auf der Außenfläche (6a) der Wand (6) des rohrförmigen Hauptkörpers aufgebracht wird, und ein Mundstück (8), welches durch das Loch (5) durchgeht und eingewalzt ist, umfasst, wobei der zusätzliche rohrförmige Körper (3) den rohrförmigen Hauptkörper (2) durch Zusammendrückung befestigt, **dadurch gekennzeichnet, dass** der zusätzliche rohrförmige Körper (3) aus Kohlenstoffstahl hergestellt ist und das Mundstück (8) eine Dicke zwischen 1 und 2 Millimetern aufweist.

2. Abzweigrohr (1) nach dem vorhergehenden Anspruch, **dadurch gekennzeichnet, dass** das Mundstück (8) eine Dicke von 1,5 Millimetern aufweist.

3. Abzweigrohr (1) nach einem der vorhergehenden Ansprüche, **dadurch gekennzeichnet, dass** mindestens ein Teil des Umfangs des Endes des eingewalzten Mundstücks (8) des zusätzlichen rohrförmigen Körpers (3) ausgedehnt ist.

4. Abzweigrohr (1) nach dem vorhergehenden Anspruch, **dadurch gekennzeichnet, dass** der gesamte Umfang des Endes des eingewalzten Mundstücks (8) des zusätzlichen rohrförmigen Körpers (3) ausgedehnt ist.

5. Abzweigrohr (1) nach den Ansprüchen 3 oder 4, **dadurch gekennzeichnet, dass** mindestens ein Teil des Umfangs des Endes des eingewalzten Mundstücks (8) des zusätzlichen rohrförmigen Körpers (3) durchgängig ist.

6. Abzweigrohr (1) nach dem vorhergehenden Anspruch, **dadurch gekennzeichnet, dass** der gesamte Umfang des Endes des eingewalzten Mundstücks (8) des zusätzlichen rohrförmigen Körpers (3) durchgängig ist.

7. Abzweigrohr (1) nach einem der vorhergehenden Ansprüche, **dadurch gekennzeichnet, dass** die Stützfläche (7) im Wesentlichen die Form der Außenfläche (6a) der Wand (6) des Hauptrohrs (2) um das Loch (5) herum zurückverfolgt.

8. Abzweigrohr (1) nach einem der vorhergehenden Ansprüche, **dadurch gekennzeichnet, dass** die Stützfläche (7) zwei diametral entgegengesetzte konkave Längen (7a) umfasst.

9. Abzweigrohr (1) nach dem vorhergehenden Anspruch, **dadurch gekennzeichnet, dass** die Stützfläche (7) zwei diametral entgegengesetzte flache Längen (7b) umfasst.

10. Abzweigrohr (1) nach einem der vorhergehenden Ansprüche, **dadurch gekennzeichnet, dass** der zusätzliche rohrförmige Körper (3) eine Fugendichtung (9) umfasst, welche gegen die Wand (6) des rohrförmigen Hauptkörpers (2) angebracht wird, wobei die genannte Dichtung (9) in einer Ringnut (10) aufgenommen ist, welche zwischen der Stützfläche (7) und dem Mundstück (8) des zusätzlichen rohrförmigen Körpers (3) angeordnet ist.

11. Abzweigrohr (1) nach einem der vorhergehenden Ansprüche, **dadurch gekennzeichnet, dass** der zusätzliche rohrförmige Körper (3) mit Endverbindungsmitteln (11) versehen ist.

12. Abzweigrohr (1) nach dem vorhergehenden Anspruch, **dadurch gekennzeichnet, dass** die Endverbindungsmittel (11) ein Innengewinde (12) am Ende des zusätzlichen rohrförmigen Körpers (3) umfassen.

13. Brandschutzeinrichtung, welche mindestens ein Abzweigrohr (1) nach einem der vorhergehenden Ansprüche umfasst, mit einem oder mehreren zusätzlichen rohrförmigen Körpern (3) versehen, wobei mindestens eins der zusätzlichen rohrförmigen Körper (3) mit einem Sprinkler (13) verbunden ist.

14. Verfahren zur Herstellung eines Abzweigrohrs (1) nach einem der Ansprüche 1-12, wobei der rohrförmige Hauptkörper (2) zu diesem Zweck mit dem Loch (5) in der Wand (6) desselben versehen ist, wobei das Verfahren die folgenden Schritte umfasst:
- das Bereitstellen des zusätzlichen rohrförmigen Körpers (3), wobei eins der Enden desselben in der Stützfläche (7) endet, von welcher aus sich eine Leitung erstreckt, unter Bestimmung des Mundstücks (8) des obenerwähnten zusätzlichen rohrförmigen Körpers (3), hergestellt aus Kohlenstoffstahl, wobei das genannte Mundstück (8) eine Dicke zwischen 1 und 2 Millimetern aufweist;
- das Einstecken der Leitung in das Loch (5) des rohrförmigen Hauptkörpers (2) bis sie an der Stützfläche (7) anliegt;
- das Einführen eines Ausdehnungswerkzeugkopf (20) durch das Mundstück (8); und
- das gleichzeitige Einwalzen des Leitungsmundstücks (8) mittels des Ausdehnens desselben, durch die Ausdehnung des Kopfes innerhalb des rohrförmigen Hauptkörpers (2), so dass er im Inneren durch Zusammendrücken gegen die Wände des Lochs (5) befestigt ist, und versucht während dieser Wirkung einen Zug aus dem Inneren des rohrförmigen Hauptkörpers (2) des zusätzlichen rohrförmigen Körpers (3) auszuüben, um die Stützfläche (7) desselben dazu zu zwingen, gegen die Außenfläche (6a) der Wand (6) angebracht zu bleiben.

15. Verfahren zur Herstellung eines Abzweigrohrs (1) nach dem vorhergehenden Anspruch, **dadurch gekennzeichnet, dass** das Mundstück (8) des rohrförmigen Körpers (3) eine Dicke von 1,5 Millimetern aufweist.

## Revendications

1. Tube de dérivation (1) qui comprend un corps tubulaire principal (2) et au moins un corps tubulaire additionnel (3) ajusté d'une manière étanche dans un trou (5) formé dans la paroi (6) dudit corps tubulaire principal (2), dans lequel le corps tubulaire additionnel (3) comprend une surface de support (7) appliquée sur la face extérieure (6a) de la paroi du corps tubulaire principal (6) et une embouchure (8), qui passe à travers le trou (5) et est élargie à froid, le corps tubulaire additionnel (3) fixant le corps tubulaire principal (2) par compression, **caractérisé en ce que** le corps tubulaire additionnel (3) est fabriqué en acier au carbone et l'embouchure (8) possède une épaisseur entre 1 et 2 millimètres.

2. Tube de dérivation (1) selon la revendication précédente, **caractérisé en ce que** l'embouchure (8) possède une épaisseur de 1,5 millimètres.

3. Tube de dérivation (1) selon l'une quelconque des revendications précédentes, **caractérisé en ce qu'**au moins une partie du périmètre de l'extrémité de l'embouchure élargie à froid (8) du corps tubulaire additionnel (3) est élargie.

4. Tube de dérivation (1) selon la revendication précédente, **caractérisé en ce que** tout le périmètre de l'extrémité de l'embouchure élargie à froid (8) du corps tubulaire additionnel (3) est élargie.

5. Tube de dérivation (1) selon les revendications 3 ou 4, **caractérisé en ce qu'**au moins une partie du périmètre de l'extrémité de l'embouchure élargie à froid (8) du corps tubulaire additionnel (3) est continue.

6. Tube de dérivation (1) selon la revendication précédente, **caractérisé en ce que** tout le périmètre de l'extrémité de l'embouchure élargie à froid (8) du corps tubulaire additionnel (3) est continue.

7. Tube de dérivation (1) selon l'une quelconque des revendications précédentes, **caractérisé en ce que** la surface de support (7) reconstitue substantiellement la forme de la face extérieure (6a) de la paroi (6) du tube principal (2) autour du trou (5).

8. Tube de dérivation (1) selon l'une quelconque des revendications précédentes, **caractérisé en ce que** la surface de support (7) comprend deux longueurs concaves diamétralement opposées (7a).

9. Tube de dérivation (1) selon la revendication précédente, **caractérisé en ce que** la surface de support (7) comprend deux longueurs plates diamétralement opposées (7b).

10. Tube de dérivation (1) selon l'une quelconque des revendications précédentes, **caractérisé en ce que** le corps tubulaire additionnel (3) comprend un joint d'étanchéité (9) appliqué contre la paroi (6) du corps tubulaire principal (2), ledit joint (9) étant logé dans une rainure annulaire (10) aménagée entre la surface de support (7) et l'embouchure (8) du corps tubulaire additionnel (3).

11. Tube de dérivation (1) selon l'une quelconque des revendications précédentes, **caractérisé en ce que** le corps tubulaire additionnel (3) est pourvu de moyens d'assemblage d'extrémité (11).

12. Tube de dérivation (1) selon la revendication précédente, **caractérisé en ce que** les moyens d'assemblage d'extrémité (11) comprennent un filetage intérieur (12) à l'extrémité du corps tubulaire additionnel (3).

13. Installation de protection contre incendie qui comprend au moins un tube de dérivation (1) selon l'une quelconque des revendications précédentes, pourvu d'un ou plusieurs corps tubulaires additionnels (3) dans laquelle au moins un des corps tubulaires additionnels (3) est relié à un gicleur (13).

14. Procédé de formation d'un tube de dérivation (1) selon l'une quelconque des revendications 1-12, dans lequel le corps tubulaire principal (2) est pourvu, à cet effet, du trou (5) dans sa paroi (6), le procédé comprenant les étapes de :
- fournir le corps tubulaire additionnel (3), dans lequel une de ses extrémités termine dans la surface de support (7) d'où un tuyau s'étend en déterminant l'embouchure (8) dudit corps tubulaire additionnel (3) fabriqué en acier au carbone, ladite embouchure (8) ayant une épaisseur entre 1 et 2 millimètres ;
- brancher le tuyau dans le trou (5) du corps tubulaire principal (2) jusqu'à ce qu'il soit en appui contre la surface de support (7) ;
- insérer une tête d'outil d'élargissement (20) à travers l'embouchure (8) ; et
- élargir à froid simultanément l'embouchure de tuyau (8), en l'élargissant par expansion de la tête à l'intérieur du corps tubulaire principal (2) de manière à être fixée à l'intérieur par compression contre les parois du trou (5), en essayant d'exercer pendant cette action un tirage depuis l'intérieur du corps tubulaire principal (2) du corps tubulaire additionnel (3) pour forcer sa surface de support (7) à demeurer appliquée contre la face extérieure (6a) de la paroi (6).

15. Procédé de formation d'un tube de dérivation (1) selon la revendication précédente, **caractérisé en ce que** l'embouchure (8) du corps tubulaire (3) possède une épaisseur de 1,5 millimètres.
